# FASCICULE DE BREVET EUROPEEN

(11) **EP 0 990 098 B1**
(45) Date de publication et mention de la délivrance du brevet: **03.09.2003**
(21) Numéro de dépôt: 99915859.5
(22) Date de dépôt: 28.04.1999
(51) Int. Cl.: F16H 63/30

(54) **ACTIONNEUR ELECTROMECANIQUE POUR BOITE DE VITESSES MECANIQUE**
VORRICHTUNG ZUM ELEKTROMECHANISCHEN SCHALTEN EINES GANGWECHSELGETRIEBES
ELECTRO-MECHANICAL ACTUATOR FOR MECHANICAL GEARBOX

(30) Priorité: 28.04.1998 FR 9805309
(43) Date de publication de la demande: 05.04.2000
(73) Titulaire: VALEO EMBRAYAGES s.a.s., 80009 Amiens Cedex 1 (FR)
(72) Inventeur: VERSHAEVE, Jean-Manuel, F-45800 Saint Jean de Braye (FR); VALERO, Thomas, F-75018 Paris (FR); MAUREL, Hervé, F-75018 Paris (FR); RANDRIAZANAMPARANY, Roland-Vévé, F-92500 Rueil Malmaison (FR); BEZIAN, Alain, F-92500 Rueil Malmaison (FR); LEBAS, Gilles, F-92600 Asnières (FR); VUILLEMIN, Jean-Claude, F-95220 Herblay (FR)
(74) Mandataire: Lemaire, Marc
(86) Numéro de dépôt international: FR9901008
(87) Numéro de publication internationale: WO99056040

(56) Documents cités:
- EP-A- 0 198 111
- EP-A- 0 579 532
- GB-A- 2 207 715
- US-A- 4 449 416
- US-A- 4 498 350

## Description

La présente invention concerne un actionneur électromécanique pour boîte de vitesses mécanique, notamment pour véhicule automobile, destiné à assurer sélectivement, d'une part la commande de la sélection des vitesses par l'intermédiaire d'une timonerie de sélection et, d'autre part, la commande du passage des vitesses par l'intermédiaire d'une timonerie de passage, du type comportant :
- un moto réducteur comportant un moteur et au moins un réducteur, propre à fournir l'énergie mécanique nécessaire auxdites commandes, et qui est commandé par un module de puissance ; et
- un système élastique d'emmagasinage de l'énergie mécanique, interposé entre le réducteur et la timonerie, apte à restituer l'énergie emmagasinée à la timonerie.

Par l'expression « sélection » (d'une vitesse) on entend désigner la manoeuvre correspondant à un déplacement horizontal du levier de vitesses sur la grille des vitesses, manoeuvre correspondant à un déplacement vertical de ce levier, pour l'engagement de la vitesse choisie. Ce passage vertical, ascendant ou descendant, s'accompagne généralement de l'actionnement des verrous de synchronisation et requiert donc une certaine dépense d'énergie, nécessaire aussi, quoique à un degré moindre, pour les manoeuvres de sélection.

Il est connu du document GB-A-2.207.715 conforme au préambule de la revendication 1, un actionneur électromécanique pour boîte de vitesses mécanique comportant respectivement :
- un premier motoréducteur, commandé par un premier module de puissance et constitué d'un premier moteur et d'un premier réducteur, propre à fournir l'énergie mécanique nécessaire pour assurer la commande la sélection des vitesses par l'intermédiaire d'une timonerie de sélection,
- un second motoréducteur commandé par un second module de puissance et constitué d'un second moteur et d'un second réducteur, propre à fournir l'énergie mécanique nécessaire pour assurer la commande du passage des vitesses par l'intermédiaire d'une timonerie de passage,
- un système élastique d'emmagasinage de l'énergie mécanique étant interposé entre le réducteur et la timonerie de chacun des premier et second motoréducteurs.

Le but de la présente invention est de proposer un actionneur électromécanique du genre en question qui soit simple et peu coûteux tout en présentant la fiabilité souhaitable et qui puisse être installé d'origine sur les véhicules neufs, ou être installé après coup sur des véhicule déjà équipés d'une commande manuelle d'engagement des vitesses à levier classique, sans nécessiter une modification de la commande existante.

Avantageusement l'actionneur selon l'invention permet d'optimiser le séquencement des déplacements en aidant à une présélection, et d'aider également le conducteur à surmonter les efforts nécessités par la manoeuvre des verrous de synchronisation lors du passage des vitesses.

De plus, la fin de la sélection ainsi que la fin du passage des vitesses afin d'arrêter automatiquement l'unité motrice à motoréducteur lorsque l'engagement de la vitesse souhaitée est achevé, sont détectées automatiquement.

A cet effet un actionneur électromécanique conforme à l'invention, du type défini au début, est caractérisé en ce que l'actionneur comporte un seul moteur, commandé par un seul module de puissance, qui peut être accouplé sélectivement à l'un ou à l'autre de deux réducteurs par un commutateur mécanique, l'un de ces réducteurs assurant la commande de la sélection des vitesses et l'autre la commande du passage des vitesses, par l'intermédiaire des timoneries respectives.

Grâce au système élastique d'emmagasinage d'énergie, les manoeuvres nécessitées par l'engagement des vitesses pourront être uniformisées et rendues plus rapides tout en ne nécessitant pas une puissance importante pour l'actionnement : le motoréducteur pourra fournir l'énergie nécessaire aux manoeuvres des commandes à plus faible puissance, par emmagasinage progressif de l'énergie dans le système élastique avant détente rapide. Cette énergie ne sera libérée que lorsque la puissance sera suffisante pour produire l'engagement franc de la vitesse sélectionnée, sans nécessiter un accroissement momentané de la puissance moteur, et sans provoquer son ralentissement.

Le système élastique, dont la précharge et la raideur sont connues, permettra ainsi de mieux maîtriser les efforts de sélection de même que les efforts de synchronisation lors du passage des vitesses, éventuellement en coopération avec un capteur de position du moteur qui n'a pas à être asservi en effort, mais seulement en position ; le système élastique uniformise automatiquement les efforts demandés au moteur. Le moteur n'a pas non plus à s'arrêter lorsqu'il rencontre la résistance de synchronisation, d'où un gain de temps.

Selon l'invention l'actionneur comporte une seule unité motrice commandant sélectivement l'une ou l'autre des deux timoneries de sélection et de passage.

Plus précisément, on met en oeuvre une seule unité motrice commandée par un seul module de puissance, ce moteur pouvant être accouplé à l'un ou à l'autre de deux réducteurs par un commutateur mécanique, l'un de ces réducteurs étant adapté à assurer la commande de la sélection des vitesses et l'autre à assurer leur passage, par l'intermédiaire de leurs timoneries respectives.

La présente invention porte encore, plus spécifiquement, sur la réalisation du commutateur mécanique qui est nécessaire dans le cas d'une réalisation à une seule unité motrice.

Ainsi, un actionneur électromécanique conforme à l'invention pourra encore être caractérisé en ce que ledit commutateur mécanique comporte un électroaimant commandé par le module de puissance, le moteur comportant, calé sur son arbre, un pignon de sortie coulissant, et ledit électroaimant étant associé à un pignon de commande fixe en rotation, relié axialement audit pignon de sortie et propre à occuper sélectivement deux positions axialement décalées, à savoir une position pour laquelle il amène ledit pignon de sortie du moteur en prise avec un premier pignon réducteur accouplé à la timonerie de sélection de la boîte, et une position pour laquelle il amène ledit pignon de sortie du moteur en prise avec un second pignon réducteur accouplé à la timonerie de passage, le premier pignon réducteur étant alors bloqué en rotation.

Dans un autre mode de réalisation, cet actionneur électromécanique est caractérisé en ce que ledit commutateur mécanique comporte un électroaimant commandé, par le module de puissance, le moteur comportant, calé sur son arbre, un pignon de sortie constituant le planétaire d'un train d'engrenages réducteur épicycloïdal, et ledit électroaimant étant associé à un pignon de commande fixe en rotation et propre à occuper sélectivement deux positions axialement décalées, à savoir une position pour laquelle il bloque en rotation un premier pignon accouplé à la couronne dentée extérieure du train, auquel cas le porte-satellites peut entraîner la timonerie de commande de passage des vitesses avec un premier rapport de réduction, et une position pour laquelle il bloque en rotation un second pignon accouplé audit porte-satellites, auquel cas ladite couronne dentée extérieure peut entraîner la timonerie de sélection des vitesses avec un second rapport de réduction, la timonerie non entraînée étant ainsi à chaque fois bloquée.

Ces dispositions seront mieux vues par la suite.

Le système élastique d'emmagasinage d'énergie mécanique pourra également être mis en oeuvre de différentes façons.

Différents modes d'exécution de l'invention vont maintenant être décrits à titre d'exemples nullement limitatifs, avec référence aux figures du dessin ci-annexé dans lequel :
- la figure 1 est schéma synoptique montrant un actionneur électromécanique pour boîte de vitesses mécanique montrant la mise en oeuvre d'un moteur pour la commande de la sélection des vitesses ou de leur passage ;
- la figure 2 est un schéma, conforme à l'invention, synoptique montrant un actionneur électromécanique pour boîte de vitesses mécanique montrant la mise en oeuvre d'un seul moteur pour la commande successive de la sélection des vitesses et de leur passage ;
- la figure 3 montre en coupe axiale schématique un commutateur mécanique utilisable dans le cas de la figure 2 ;
- la figure 4 montre schématiquement un autre commutateur mécanique utilisable dans le cas de la figure 2 ;
- la figure 5 montre en coupe axiale par la ligne V-V de la figure 6 un système élastique d'emmagasinage d'énergie mécanique utilisable dans le cas des figures 1 et 2 ;
- la figure 6 montre ce système en coupe transversale par la ligne VI-VI de la figure 5 ; et
- la figure 7 montre en coupe axiale un autre système élastique d'emmagasinage d'énergie mécanique utilisable dans le cas des figures 1 et 2.

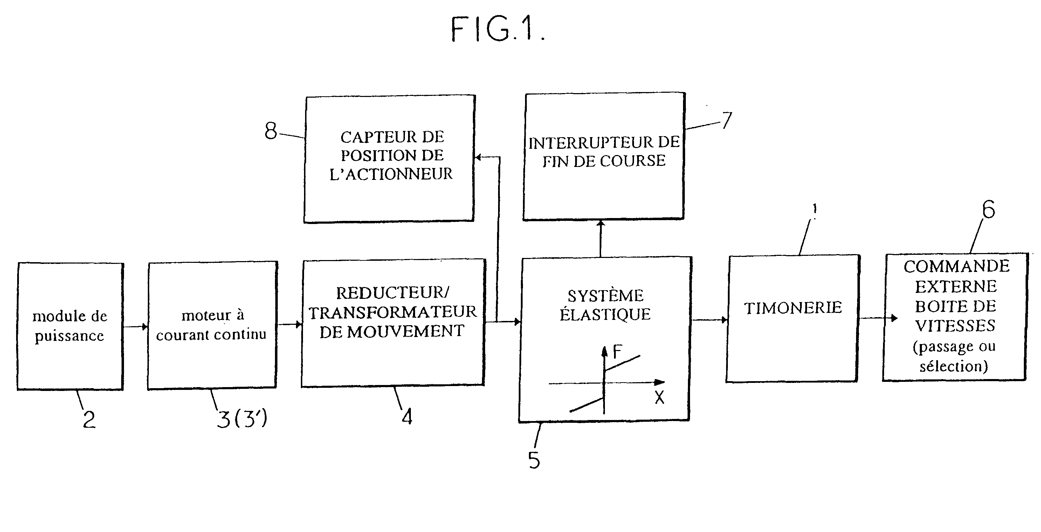

On voit que dans le mode de réalisation de la figure 1, la timonerie 1 de sélection des vitesses à commande externe 6 est entraînée par un moteur comportant un module de puissance 2 alimentant en courant commandé le moteur à courant continu 3, lequel entraîne la timonerie 1 par l'intermédiaire d'un réducteur de mouvement 4 (ou réducteur de vitesse) et d'un système élastique d'emmagasinage d'énergie mécanique 5. Les ensembles 3, 4, 5 seront décrits plus bas. Dans le rectangle représentant le système élastique 5, on a représenté un diagramme F = f(X) exprimant le fait que le système comporte un ressort d'emmagasinage d'énergie, en principe précontraint, qui est comprimé progressivement sous l'effet de l'entraînement du motoréducteur 3-4 et qui peut se détendre brusquement pour restituer l'énergie emmagasinée en un temps très court et ainsi actionner très rapidement la timonerie 1, ceci permettant de ne disposer que d'un moteur 3 de puissance limitée, inférieure à la puissance nécessitée par l'actionnement de la timonerie. Lors de sa détente, ce système actionne un interrupteur de fin de course 7 dont le rôle a déjà été indiqué plus haut. Enfin on a représenté en 8 un capteur de position de moteur de tout type connu, par exemple électromagnétique et permettant de connaître à tout moment le positionnement du moteur.

Dans ce mode de réalisation de l'invention, on pourra utiliser exactement le même schéma, avec un autre moteur à courant continu 3', pour la commande du passage des vitesses. Cependant le moteur 3' pourra avoir une puissance différente de celle du moteur 3, et un rapport de réduction différent, de même que le système élastique pourra avoir une raideur différente, puisque les timoneries n'auront pas forcément les mêmes efforts à exercer sur la boîte de vitesses. L'analogie entre les structures des moteurs pour les deux types de commande permettra ainsi une standardisation et une souplesse d'implantation des différents organes.

Selon l'invention, les commandes de sélection et de passage des vitesses ne se recoupant pas dans le temps, c'est-à-dire n'étant jamais en coïncidence, un seul ensemble module de puissance - moteur à courant continu est utilisé pour commander soit la timonerie de sélection des vitesses, soit la timonerie de passage des vitesses, à condition de disposer d'un commutateur mécanique apte à accoupler l'arbre de sortie du moteur soit à un réducteur accouplé à la timonerie de sélection, soit à un réducteur accouplé à la timonerie de passage.

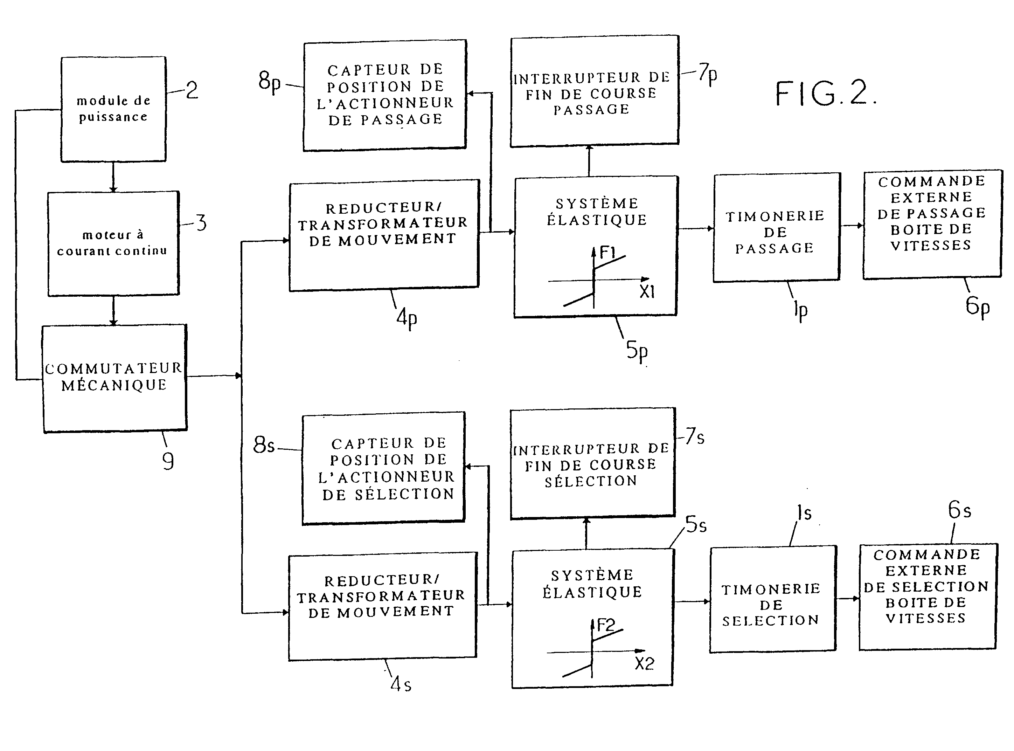

C'est ce qui a été représenté par le schéma synoptique de la figure 2, dans lequel on a utilisé les mêmes références qu'à la figure 1 pour désigner les mêmes éléments dans la partie commune, et les mêmes références accompagnées des indices « s » ou « p » dans les deux parties disposées après le commutateur mécanique 9, « s » pour la partie de commande de la timonerie de sélection, et « p » pour la partie de commande de la timonerie de passage des vitesses.

Le commutateur mécanique 9 pourra être commandé par un électroaimant (comme cela sera vu plus bas) ou par un micromoteur électrique. Si la transformation de mouvement de la sélection n'est pas irréversible, le commutateur mécanique devra assurer cette fonction : le moteur actionnera la commande du passage des vitesses, la sélection des vitesses devra être immobilisée (énergie de la présélection stockée dans le système élastique d'emmagasinage d'énergie).

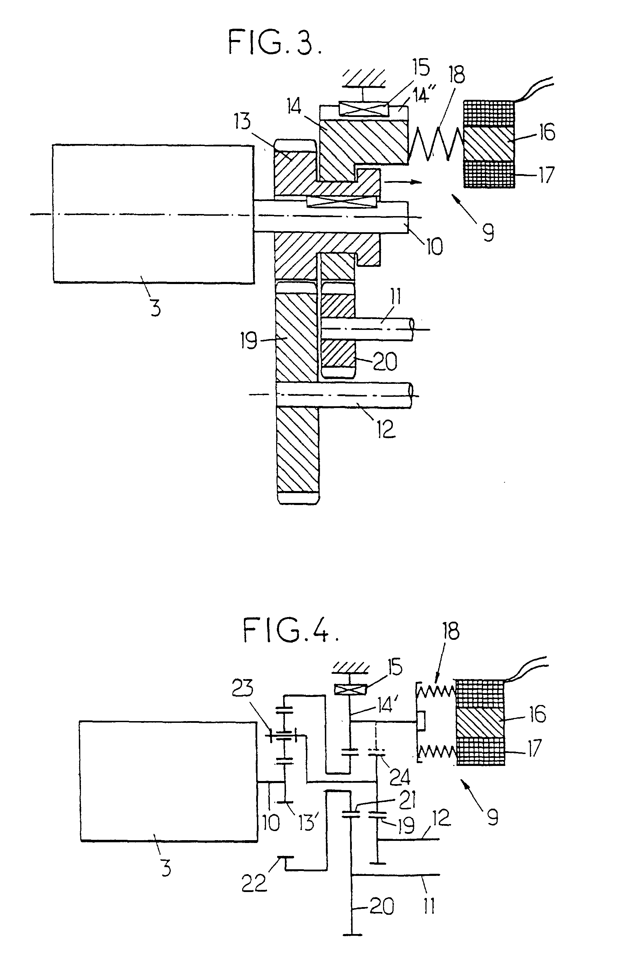

Ceci étant, on a représenté schématiquement à la figure 3 un commutateur mécanique 9 propre à accoupler l'arbre de sortie 10 du moteur à courant continu 3 soit à l'arbre 11 de commande de la timonerie 1s de sélection (par l'intermédiaire d'un système élastique 5s non représenté sur cette figure), soit à l'arbre 12 de commande de la timonerie 1p de passage (de même par l'intermédiaire d'un système élastique 5p non représenté sur cette figure).

A cet effet, on a monté sur l'arbre 10 un pignon axialement coulissant 13 claveté sur l'arbre 10 pour en être solidaire en rotation. Ce pignon de sortie 13 est en prise avec un pignon de commande 14 propre à coulisser axialement parallèlement à l'axe de l'arbre 10 du moteur, mais calé en rotation par une dent fixe 15 engagée à coulissement axial dans une rainure externe 14'' du pignon 14, lequel est relié au noyau mobile 16 d'un électroaimant fixe 17 par un ressort de rappel 18.

Dans la position représentée sur la figure 3, l'électroaimant n'est pas activé, et la position axiale du pignon de commande 14 est telle que le pignon de sortie 13 est en prise avec un pignon réducteur 19 accouplé à la timonerie de commande de passage de la boîte de vitesses par l'arbre 12. Dans cette position et pour la raison indiquée plus haut, le pignon de commande 14 bloque en rotation un autre pignon réducteur 20 accouplé à la timonerie de commande de sélection de la boîte de vitesses par l'arbre 11.

Lorsque l'on commute de la commande du passage à la commande de sélection des vitesses, l'électroaimant 17 est activé et déplace le noyau 16 vers la droite du dessin, ce qui, par l'intermédiaire du pignon de commande 14, fait coulisser le pignon de sortie 13 sur l'arbre 10 et le met en prise avec le pignon réducteur 20, le pignon réducteur 19 étant alors libéré.

Dans le mode de réalisation de la figure 4, on a représenté l'utilisation possible d'un train d'engrenages réducteur épicycloïdal pour commuter le pignon de sortie 13' du moteur électrique à courant continu 3 soit sur le pignon réducteur 19 relié par l'arbre 12 à la timonerie de passage 1p des vitesses, soit sur le pignon réducteur 20 relié par l'arbre 11 à la timonerie de sélection 1s Ce train d'engrenages épicycloïdal comporte le pignon de sortie 13' comme planétaire, et un ensemble de satellites portés par un porte-satellites 23 et engrenés d'une part avec le pignon de sortie 13', d'autre part avec une couronne dentée extérieure 22, laquelle est accouplée à un premier pignon 21, tandis que le porte-satellites 23 est accouplé à un second pignon 24. Le pignon 21 ou le pignon 24 peut être bloqué en rotation par un pignon de commande 14' bloqué en rotation par une dent fixe 15 (comme dans la figure 3) et pouvant coulisser axialement grâce à l'électroaimant 16, 17 à ressort de rappel 18, entre deux positions : dans la position représentée sur la figure 4 le pignon de commande 14' bloque le premier pignon 21 en prise avec le pignon réducteur 20 de la commande de sélection, ce qui bloque ce pignon 20 en même temps que la couronne dentée extérieure 22. De ce fait, le porte-satellites 23 entraîne dans sa rotation le second pignon 24 accouplé au pignon réducteur 19, ce qui entraîne la timonerie de passage des vitesses.

Au contraire, lorsque le pignon de commande 14' est déplacé vers la droite par l'électroaimant 16, 17, lorsque celui-ci est activé, il occupe la position représentée en pointillés pour laquelle il bloque la rotation du second pignon 24, ce qui en même temps bloque la rotation du pignon réducteur 19 de la timonerie de passage ainsi que celle du porte-satellites 23. La couronne dentée extérieure 22 est alors entraînée en rotation, ainsi que le premier pignon 21, ce qui entraîne la timonerie de sélection par l'intermédiaire du pignon réducteur 20.

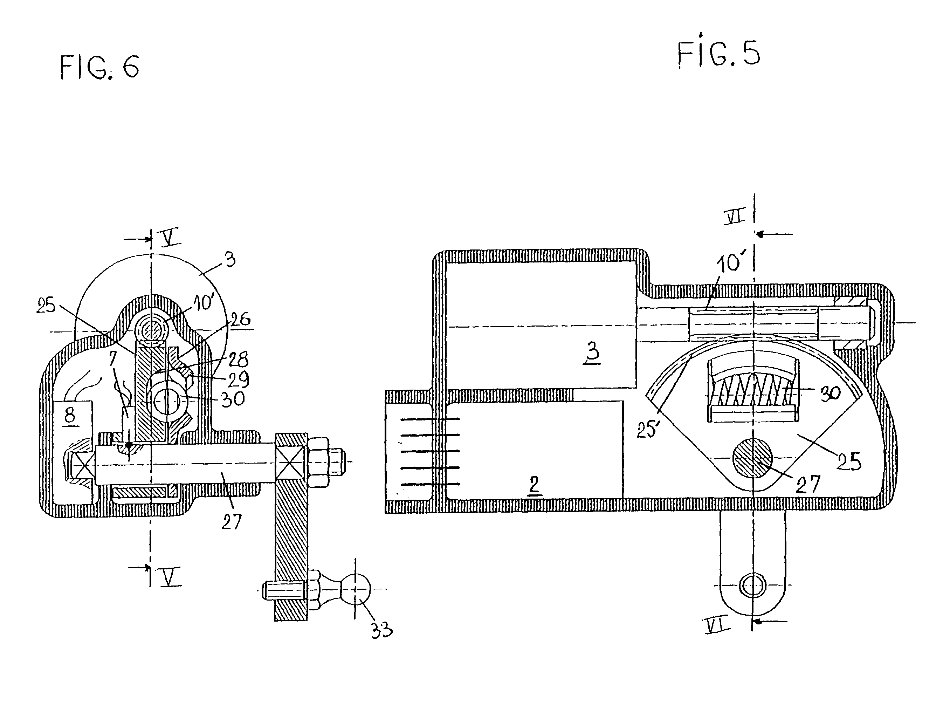

Sur les figures 5 et 6 on a représenté un premier mode de réalisation possible d'un système élastique d'emmagasinage de l'énergie d'un moteur 3 commandé par son module de puissance 2.

L'arbre à vis sans fin 10' de ce moteur est en prise avec un secteur denté 25' d'une première plaque en forme de secteur circulaire 25, laquelle peut pivoter sur un bout d'axe 27 servant également d'axe de rotation à une autre plaque en forme de secteur de cercle 26 dont il est solidarisé. Dans chacune des plaques 25 et 26, qui peuvent donc pivoter librement l'une par rapport à l'autre autour de leur axe commun 27, est ménagée une ouverture, respectivement 28 et 29, ces ouvertures étant en regard l'une de l'autre de sorte qu'elles peuvent servir à la réception d'un ressort précomprimé 30. A l'une de ses extrémités ce ressort est maintenu en place par deux pattes verticales de la plaque 25, tandis qu'à son autre extrémité il est maintenu en place par deux pattes horizontales de la plaque 26. Ainsi le ressort 30 ne risque pas d'être soumis à des efforts de basculement.

Grâce à ce système élastique, on voit que la rotation de l'arbre à vis sans fin 10' entraîne en rotation la plaque 25, ce qui comprime le ressort 30, la plaque 26 restant bloquée dans sa position par la force résistante de la timonerie correspondante, qui s'exerce sur l'axe de sortie 27 (la rotule de liaison à la timonerie est référencée 33 sur la figure 6). Lorsque le ressort 30 est suffisamment comprimé pour surmonter l'effort résistant de la timonerie, il se détend en entraînant dans sa rotation la plaque 26 et l'axe de sortie 27, ce qui effectue la manoeuvre voulue de la timonerie concernée de sélection ou de passage. L'exécution de cette manoeuvre est constatée par la commande de l'interrupteur de fin de course référencé en 7. Sur la figure 6 on a également représenté schématiquement en 8 le capteur de position de l'actionneur, c'est-à-dire de son moteur 3.

Ensuite le module de puissance 2 peut commander par l'intermédiaire du moteur 3 le retour des plaques 25 et 26 de leurs positions initiales respectives.

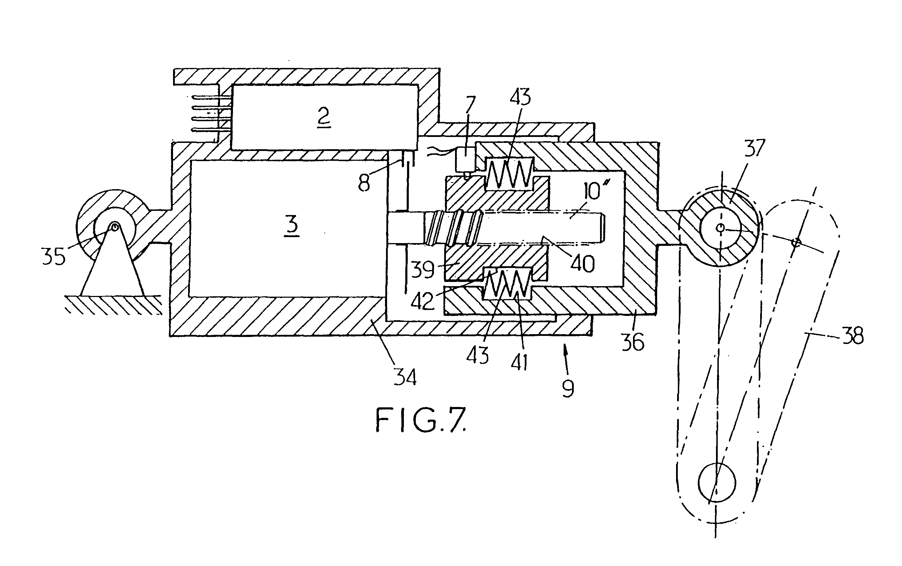

Dans le mode de réalisation de la figure 7, on a représenté une variante dans laquelle les parties coopérantes du système élastique n'ont plus un déplacement relatif en rotation mais un déplacement relatif en translation, le principe général de fonctionnement étant cependant le même dans les deux cas.

Dans ce mode de réalisation on a représenté un système élastique incluant dans le même carter 34, monté à une extrémité sur un axe 35, le moteur 3, son module de puissance 2 ainsi que le système élastique proprement dit, encore référencé en 9. Ce système élastique comporte une cage 36 montée coulissante sur le carter 34 du moteur électrique et accouplée par la liaison 37 à une timonerie de commande de sélection ou de passage des vitesses, ici schématisée en 38. Un noyau 39 est monté coulissant dans cette cage 36 et est engagé par un logement hélicoïdal central 40 sur l'arbre, par exemple à vis à billes 10'', du moteur 3. Des logements en regard 41 de la cage 36 et 42 du noyau 39 contiennent un ensemble de ressorts précomprimés 43. Enfin un interrupteur de fin de course 7 est disposé sur la cage 36 pour être manoeuvré par l'arrivée en fin de course du noyau 39, et un capteur de position de l'actionneur schématisé en 8 est associé à l'arbre 10'' du moteur.

Ceci étant, on voit que la rotation de l'arbre 10'' entraîne le déplacement axial du noyau 39 en comprimant les ressorts 43 tant que la résistance présentée sur la liaison 37 par la timonerie 38 empêche le déplacement axial de la cage 36. Lorsque la résistance de la timonerie devient inférieure à la force exercée par les ressorts 43 sur la liaison 37, les ressorts se détendent brusquement, ce qui manoeuvre la timonerie 38 et commande en fin de course la manoeuvre de l'interrupteur 7. Ultérieurement, le module de puissance 2 du moteur 3 peut commander le retour de la cage 36 et du noyau 39 à leurs positions initiales.

Enfin, et comme cela ressort de ce qui précède, on comprend que les arbres de passage et de sélection sont rotatifs, et qu'il existe dans la boîte de vitesses au moins un dispositif transformant le mouvement de rotation de l'arbre de sélection en translation, les structures pouvant d'ailleurs être interverties.

Le levier de vitesses classique peut aussi être remplacé par un levier multidirectionnel actionnant des contacts électriques, du type dit « joy stick ».

## Revendications

1. Actionneur électromécanique pour une boîte de vitesses mécanique, notamment pour véhicule automobile, destiné à assurer sélectivement, d'une part la commande de la sélection des vitesses par l'intermédiaire d'une timonerie de sélection et, d'autre part, la commande du passage des vitesses par l'intermédiaire d'une timonerie de passage, du type comportant :
- un motoréducteur (3, 4) comportant un moteur (3) et au moins un réducteur, propre à fournir l'énergie mécanique nécessaire auxdites commandes, et qui est commandé par un module de puissance ; et
- un système élastique (5) d'emmagasinage de l'énergie mécanique, interposé entre le réducteur et la timonerie (1), apte à restituer l'énergie emmagasinée à la timonerie,
- un interrupteur de fin de course (7) propre à provoquer l'apparition d'un signal représentatif de l'état comprimé (emmagasinage d'énergie) du dit système élastique (5), et ainsi de détecter le fait que la sélection ou l'engagement du rapport souhaité de la boîte a bien été obtenu,
**caractérisé en ce que** l'actionneur comporte un seul moteur (3), commandé par un seul module de puissance (2), qui peut être accouplé sélectivement à l'un ou à l'autre de deux réducteurs (4s, 4p) par un commutateur mécanique (9), l'un de ces réducteurs (4s) assurant la commande de la sélection des vitesses et l'autre (4p) la commande du passage des vitesses, par l'intermédiaire des timoneries respectives (1s, 1p).

2. Actionneur électromécanique selon la revendication 1, **caractérisé en ce que** ledit commutateur mécanique (9) comporte un électroaimant commandé (16, 17) par le module de puissance (2), le moteur (3) comportant, calé sur son arbre (10), un pignon de sortie coulissant (13), et ledit électroaimant étant associé à un pignon de commande fixe en rotation (14), relié axialement audit pignon de sortie et propre à occuper sélectivement deux positions axialement décalées, à savoir une position pour laquelle il amène ledit pignon de sortie (13) du moteur (3) en prise avec un premier pignon réducteur (20) accouplé à la timonerie de sélection de la boîte, et une position pour laquelle il amène ledit pignon de sortie (13) du moteur (3) en prise avec un second pignon réducteur (19) accouplé à la timonerie de passage, le premier pignon réducteur (20) étant alors bloqué en rotation.

3. Actionneur électromécanique selon la revendication 1, **caractérisé en ce que** ledit commutateur mécanique (9) comporte un électroaimant commandé (16, 17) par le module de puissance (2), le moteur (3) comportant, calé sur son arbre (10), un pignon de sortie (13') constituant le planétaire d'un train d'engrenages réducteur épicycloïdal, et ledit électroaimant (16, 17) étant associé à un pignon de commande (14') fixe en rotation et propre à occuper sélectivement deux positions axialement décalées, à savoir une position pour laquelle il bloque en rotation un premier pignon (21) accouplé à la couronne dentée extérieure (22) du train, auquel cas le porte-satellites (23) peut entraîner la timonerie de commande de passage des vitesses (1p) avec un premier rapport de réduction, et une position pour laquelle il bloque en rotation un second pignon (24) accouplé audit porte-satellites (23), auquel cas ladite couronne dentée extérieure (22) peut entraîner la timonerie de sélection des vitesses (1s) avec un second rapport de réduction, la timonerie non entraînée étant ainsi à chaque fois bloquée.

4. Actionneur électromécanique selon l'une quelconque des revendications précédentes, **caractérisé en ce que** ledit système élastique (5) comporte au moins deux plaques pivotantes (25, 26) reliées l'une à l'autre par un ressort (30), la première (25) étant accouplée à l'arbre de sortie (10') d'un moteur électrique (3), la seconde (26) à un arbre mené (27) accouplé à une timonerie (33) de commande de sélection ou de passage, ladite autre plaque (26) pouvant ainsi occuper deux positions angulairement décalées, à savoir une position bloquée par ladite timonerie (33), pour laquelle ledit ressort (30) emmagasine de l'énergie du fait de la rotation dudit arbre de sortie (10'), et une position active au passage de laquelle la détente dudit ressort (30) provoque la manoeuvre de ladite timonerie (33), l'arrivée dans cette position active provoquant l'actionnement dudit interrupteur (7) de fin de course.

5. Actionneur électromécanique selon la revendication 4, **caractérisé en ce que** ledit moteur électrique (3) est constitué par un motoréducteur à arbre à vis sans fin (10') en prise avec un secteur denté (25') de ladite première plaque (25).

6. Actionneur électromécanique selon l'une quelconque des revendications 1 à 3, **caractérisé en ce que** ledit système élastique (5) comporte d'une part une cage (36) montée coulissante sur un carter (34) de moteur électrique (3) et accouplée à une timonerie (38) de commande de sélection ou de passage, et d'autre part un noyau (39) monté coulissant par rapport à ladite cage, accouplé à l'arbre de sortie (10'') dudit moteur (3) et relié à la cage (36) par un ou des ressorts (43), ladite cage (36) pouvant ainsi occuper deux positions axialement décalées, à savoir une position bloquée par ladite timonerie (38), pour laquelle le ou lesdits ressorts (43) emmagasinent de l'énergie du fait de la rotation dudit arbre (10'') de sortie, et une position active au passage de laquelle la détente du ou desdits ressorts (43) provoque la manoeuvre de ladite timonerie (38), l'arrivée dans cette position active provoquant l'actionnement dudit interrupteur (7) de fin de course.

7. Actionneur électromécanique selon la revendication 6, **caractérisé en ce que** ledit moteur électrique (3) est constitué par un motoréducteur à vis à billes (10'') ou à gilets trapézoïdaux en prise avec un logement hélicoïdal (40) dudit noyau (39).

8. Actionneur électromécanique selon l'une quelconque des revendications 4 à 6, **caractérisé en ce qu'**un capteur de position angulaire (8) de l'unité motrice est associé audit arbre de sortie (10', 10'') du moteur électrique (3) ou à un organe mené après réduction.

## Patentansprüche

1. Elektromechanische Steuereinrichtung für ein mechanisches Schaltgetriebe, insbesondere für Kraftfahrzeuge, die dazu bestimmt ist, wahlweise einerseits die Betätigung der Gangwahl über ein Gangwahlgestänge, und andererseits den Gangwechsel über ein Gangwechselgestänge zu bewirken, umfassend:
- eine Getriebemotor-Antriebseinheit (3, 4), die einen Motor (3) und wenigstens ein Untersetzungsgetriebe aufweist, um die für die besagten Betätigungen erforderliche mechanische Energie bereitzustellen, und die durch ein Leistungsmodul betätigt wird, sowie
- ein zwischen das Untersetzungsgetriebe und das Gestänge (1) geschaltetes Federsystem (5) zur Speicherung der mechanischen Energie, das zur Abgabe der gespeicherten Energie an das Gestänge geeignet ist,
- einen Endschalter (7), der das Auftreten eines für den zusammengedrückten Zustand (Energiespeicherung) des besagten Federspeichersystems (5) repräsentatives Signals herbeiführen und somit den Umstand feststellen kann, dass die Wahl oder das Einlegen der gewünschten Gangstufe des Schaltgetriebes tatsächlich erfolgt ist,
**dadurch gekennzeichnet, dass** die Steuereinrichtung einen einzigen Motor (3) umfasst, der durch ein einziges Leistungsmodul (2) betätigt wird, und der wahlweise mit dem einen oder dem anderen von zwei Untersetzungsgetrieben (4s, 4p) durch einen mechanischen Schalter (9) verbunden werden kann, wobei eines dieser Untersetzungsgetriebe (4s) die Betätigung der Gangwahl und das andere (4p) die Betätigung des Gangwechsels über ihre jeweiligen Gestänge (1s, 1p) bewirken kann.

2. Elektromechanische Steuereinrichtung nach Anspruch 1, **dadurch gekennzeichnet, dass** der besagte mechanische Schalter (9) einen Elektromagneten (16, 17) enthält, der durch das Leistungsmodul (2) betätigt wird, wobei der besagte Motor (3) ein drehfest an seiner Welle (10) angebrachtes verschiebbares Abtriebsrad (13) umfasst und wobei der besagte Elektromagnet mit einem drehfesten Antriebsrad (14) verbunden ist, das axial mit dem besagten Abtriebsrad verbunden ist und wahlweise zwei axial versetzte Positionen einnehmen kann, und zwar eine Position, in der es das besagte Abtriebsrad (13) des Motors (3) mit einem ersten Untersetzungsrad (20) in Eingriff bringt, das mit dem Gangwahlgestänge des Getriebes verbunden ist, und eine Position, in der es das besagte Abtriebsrad (13) des Motors (3) mit einem zweiten Untersetzungsrad (19) in Eingriff bringt, das mit dem Gangwechselgestänge des besagten Getriebes verbunden ist, wobei das besagte erste Untersetzungsrad (20) dann drehblockiert ist.

3. Elektromechanische Steuereinrichtung nach Anspruch 1, **dadurch gekennzeichnet, dass** der besagte mechanische Schalter (9) einen Elektromagneten (16, 17) enthält, der durch das Leistungsmodul (2) betätigt wird, wobei der besagte Motor (3) ein drehfest an seiner Welle (10) angebrachtes Abtriebsrad (13') umfasst, das das Sonnenrad eines Planetengetriebezugs bildet, und wobei der besagte Elektromagnet (16, 17) mit einem drehfesten Antriebsrad (14') verbunden ist, das wahlweise zwei axial versetzte Positionen einnehmen kann, und zwar eine Position, in der es ein mit dem Außenzahnkranz (22) des besagten Getriebezugs verbundenes erstes Zahnrad (21) drehblockiert, in welchem Fall der Planetenradträger (23) das Gestänge zur Gangwechselbetätigung (1p) mit einem ersten Untersetzungsverhältnis antreiben kann, und eine Position, in der es ein mit dem besagten Planetenradträger (23) verbundenes zweites Zahnrad (24) drehblockiert, in welchem Fall der besagte Außenzahnkranz (22) das Gangwahlgestänge (1s) mit einem zweiten Untersetzungsverhältnis antreiben kann, wobei das nicht angetriebene Gestänge dadurch jeweils blockiert ist.

4. Elektromechanische Steuereinrichtung nach einem der vorangehenden Ansprüche, **dadurch gekennzeichnet, dass** das besagte Federspeichersystem (5) wenigstens zwei durch eine Feder (30) miteinander verbundene Schwenkplatten (25, 26) umfasst, wobei die erste (25) mit der Abtriebswelle (10') eines Elektromotors (3) und die zweite (26) mit einer mit einem Gestänge (33) zur Betätigung der Gangwahl oder des Gangwechsels verbundenen getriebenen Welle (27) verbunden ist, wobei die besagte andere Platte (26) daher zwei winklig versetzte Positionen einnehmen kann, und zwar eine durch das besagte Gestänge (33) blockierte Position, in der die besagte Feder (30) aufgrund der Drehung der besagten Abtriebswelle (10') Energie speichert, und eine Wirkposition, bei deren Durchgang die Entspannung der besagten Feder (30) die Betätigung des besagten Gestänges (33) bewirkt, wobei das Eintreffen in dieser Wirkposition die Betätigung des besagten Endschalters (7) zur Folge hat.

5. Elektromechanische Steuereinrichtung nach Anspruch 4, **dadurch gekennzeichnet, dass** der besagte Elektromotor (3) aus einem Getriebemotor mit einer Schneckenwelle (10') besteht, die mit einem Zahnsegment (25') der besagten ersten Platte (25) in Eingriff kommt.

6. Elektromechanische Steuereinrichtung nach einem der Ansprüche 1 bis 3, **dadurch gekennzeichnet, dass** das besagte Federspeichersystem (5) einerseits einen Käfig (36), der gleitend an einem Gehäuse (34) eines Elektromotors (3) gelagert und mit einem Gestänge (38) zur Betätigung der Gangwahl oder des Gangwechsels verbunden ist, und andererseits einen im Verhältnis zu dem besagten Käfig gleitend gelagerten Kern (39) umfasst, der an die Abtriebswelle (10") des besagten Motors (3) angeschlossen und durch eine oder mehrere Federn (43) mit dem besagten Käfig (36) verbunden ist, wobei der besagte Käfig (36) daher zwei axial versetzte Positionen einnehmen kann, und zwar eine durch das besagte Gestänge (38) blockierte Position, in der die Feder bzw. die Fedem (43) aufgrund der Drehung der besagten Abtriebswelle (10") Energie speichem, und eine Wirkposition, bei deren Durchgang die Entspannung der besagten Feder bzw. Fedem (43) die Betätigung des besagten Gestänges (38) bewirkt, wobei das Eintreffen in dieser Wirkposition die Betätigung des besagten Endschalters (7) zur Folge hat.

7. Elektromechanische Steuereinrichtung nach Anspruch 6, **dadurch gekennzeichnet, dass** der besagte Elektromotor (3) aus einem Getriebemotor mit einer Kugelumlaufschnecke (10") oder Trapezgewindeschnecke besteht, die mit einer spiralförmigen Aufnahme (40) des besagten Kerns (39) in Eingriff kommt.

8. Elektromechanische Steuereinrichtung nach einem der Ansprüche 4 bis 6, **dadurch gekennzeichnet, dass** ein Winkelpositionsgeber (8) für die Antriebseinheit mit der besagten Abtriebswelle (10', 10") des Elektromotors (3) oder mit einem angetriebenen Organ nach der Untersetzung verbunden ist.

## Claims

1. Electromechanical actuator for a mechanical gearbox, in particular for a motor vehicle, intended to selectively provide on the one hand control of the gear selection by means of a selection linkage and on the other hand control of the gear change by means of a change linkage, of the type comprising:
- a motor and gearbox unit (3, 4) comprising a motor (3) and at least one gearbox which is able to supply the necessary mechanical energy to the said controls and which is controlled by a power module; and
- an elastic and mechanical energy storage system (5) interposed between the gearbox and the linkage (1), able to restore the stored energy to the linkage,
- an end of travel switch (7) able to cause the appearance of a signal representing the compressed state (energy storage) of the said elastic system (5) and thus to detect the fact that the selection or engagement of the required ratio in the box has indeed been obtained,
**characterised in that** the actuator comprises a single motor (3), controlled by a single power module (2), which can be selectively coupled to one or other of two gearboxes (4s, 4p) by a mechanical switch (9), one of these gearboxes (4s) providing control of the gear selection and the other (4p) control of the gear change, by means of the respective linkages (1s, 1p).

2. Electromechanical actuator according to Claim 1, **characterised in that** the said mechanical switch (9) comprises an electromagnet (16, 17) controlled by the power module (2), the motor (3) comprising, keyed to its shaft (10), a sliding output pinion (13), and the said electromagnet being associated with a control pinion (14) fixed with respect to rotation, axially connected to the said output pinion and able to selectively occupy two axially offset positions, namely a position in which it brings the said output pinion (13) of the motor (3) into engagement with a first reducing pinion (20) coupled to the selection linkage of the box, and a position in which it brings the said output pinion (13) of the motor (3) into engagement with a second reducing pinion (19) coupled to the change linkage, the first reducing pinion (20) then being locked with respect to rotation.

3. Electromechanical actuator according to Claim 1, **characterised in that** the said mechanical switch (9) comprises an electromagnet (16, 17) controlled by the power module (2), the motor (3) comprising, keyed to its shaft (10), an output pinion (13') constituting the sun gear of an epicyclic gear train, and the said electromagnet (16, 17) being associated with a control pinion (14') fixed with respect to rotation and able to selectively occupy two axially offset positions, namely a position in which it rotationally locks a first pinion (21) coupled to the external toothed ring (22) of the train, in which case the planet carrier (23) can drive the linkage controlling the gear change (1p) with a first reduction ratio, and a position in which it rotationally locks a second pinion (24) coupled to the said planet carrier (23), in which case the said external toothed ring (22) can drive the gear selection linkage (1s) with a second reduction ratio, the non-driven linkage thus being locked on each occasion.

4. Electromechanical actuator according to any one of the preceding claims, **characterised in that** the said elastic system (5) comprises at least two pivoting plates (25, 26) connected to each other by a spring (30), the first (25) being coupled to the output shaft (10') of the electric motor (3), the second (26) to a driven shaft (27) coupled to a selection or change control linkage (33), the said other plate (26) thus being able to occupy two angularly offset positions, namely a position locked by the said linkage (33), in which the said spring (30) stores energy because of the rotation of the said output shaft (10'), and an active position in which, when it is passed to, the relaxation of the said spring (30) causes the manoeuvring of the said linkage (33), the arrival in this active position causing the actuation of the said end of travel switch (7).

5. Electromechanical actuator according to Claim 4, **characterised in that** the said electric motor (3) consists of a motor and gearbox unit with a shaft with a worm (10') in engagement with a toothed sector (25') on the said first plate (25).

6. Electromechanical actuator according to any one of Claims 1 to 3, **characterised in that** the said elastic system (5) comprises on the one hand a cage (36) mounted so as to slide on a casing (34) of an electric motor (3) and coupled to a selection or change control linkage (38), and on the other hand a core (39) mounted so as to slide with respect to the said cage, coupled to the output shaft (10'') of the said motor (3) and connected to the change (36) by one or more springs (43), the said cage (36) thus being able to occupy two axially offset positions, namely a position locked by the said linkage (38) in which the said spring or springs (43) store energy because of the rotation of the said output shaft (10''), and an active position in which, when it is passed to, the relaxation of the said spring or springs (43) causes the manoeuvring of the said linkage (38), the arrival in this active position causing the actuation of the said end of travel switch (7).

7. Electromechanical actuator according to Claim 6, **characterised in that** the said electric motor (3) consists of a motor and gearbox unit with a ballscrew (10'') or trapezoidal jackets in engagement with a helical housing (40) in the said core (39).

8. Electromechanical actuator according to any one of Claims 4 to 6, **characterised in that** an angular position sensor (8) of the drive unit is associated with the said output shaft (10', 10'') of the electric motor (3) or with a driven component after reduction.
